# EUROPÄISCHE PATENTSCHRIFT

(11) **EP 1 979 686 B1**
(45) Veröffentlichungstag und Bekanntmachung des Hinweises auf die Patenterteilung: **05.03.2014**
(21) Anmeldenummer: 07700166.7
(22) Anmeldetag: 25.01.2007
(51) Int. Cl.: F24D 10/00, F24D 19/10

(54) **VENTILANORDNUNG ZUM ANSCHLIESSEN EINES WÄRMETAUSCHERS EINER WARMWASSERENTNAHMEVORRICHTUNG AN EIN FERNWÄRMENETZ**
VALVE ARRANGEMENT FOR CONNECTING A HEAT EXCHANGER OF A HOT WATER EXTRACTION DEVICE TO A DISTRICT HEATING NETWORK
SYSTÈME DE SOUPAPES POUR RACCORDER UN ÉCHANGEUR DE CHALEUR D'UN DISPOSITIF DE PRÉLÈVEMENT D'EAU CHAUDE À UN RÉSEAU DE CHAUFFAGE URBAIN

(30) Priorität: 27.01.2006 DE 102006004180
(43) Veröffentlichungstag der Anmeldung: 15.10.2008
(73) Patentinhaber: Danfoss A/S, 6430 Nordborg (DK)
(72) Erfinder: MØLBÆk, Jens Jørgen, DK-6430, Nordborg (DK); HUDOKLIN, Urh, SI-8210 Trebnje (SI); VIDIC, Tomaz, SI-1251 Moravce (SI)
(86) Internationale Anmeldenummer: PCT/DK2007/000032
(87) Internationale Veröffentlichungsnummer: WO 2007/085256

(56) Entgegenhaltungen:
- DE-C1- 19 618 093
- GB-A- 1 270 101
- GB-A- 2 179 410

## Beschreibung

Die Erfindung betrifft eine Ventilanordnung zum Anschließen eines Wärmetauschers einer Warmwasserentnahmevorrichtung an ein Fernwärmenetz mit einem primärseitigen Ventil, das einen Durchfluß von Wärmeträgerfluid durch eine Primärseite des Wärmetauschers steuert, und einem druckgesteuerten sekundärseitigen Ventil, das auf einen Durchfluß von Brauchwasser durch eine Sekundärseite des Wärmetauschers einwirkt, wobei das primärseitige Ventil durch das sekundärseitige Ventil über einen Stößel betätigbar ist.

Eine derartige Ventilanordnung ist beispielsweise aus DE 196 18 093 C2 bekannt. Dokument DE 196 18 093 C2 offenbart eine Ventilanordnung nach dem Oberbegriff des Anspruchs 1. Das Ventilelement des primärseitigen Ventils ist durch eine Öffnungsfeder beaufschlagt, die das Ventilelement vom Ventilsitz weg drückt. Das Ventilelement ist dabei an einer Spindel befestigt, die an einem Stößel anliegt, der mit dem sekundärseitigen Ventilelement verbunden wird. Wenn auf der Sekundärseite eine Brauchwasserentnahme erfolgt, entsteht eine Druckdifferenz über das sekundärseitige Ventil, die bewirkt, daß das sekundärseitige Ventil öffnet. In diesem Fall kann die Öffnungsfeder des primärseitigen Ventils das primärseitige Ventil öffnen. Wenn hingegen das sekundärseitige Ventil in seine Schließposition bewegt wird, dann drückt der Stößel die Spindel des primärseitigen Ventilelements in die Schließstellung. Auf das sekundärseitige Ventil wirkt noch ein Thermoelement, das eine Temperatursteuerung der Ventilanordnung bewirken soll.

Bei einer derartigen Ausbildung müssen die Teile der Ventilanordnung relativ genau aufeinander abgestimmt werden, um ein zufriedenstellendes Arbeiten des Ventils zu erreichen. Da das sekundärseitige Ventil sowohl über eine Druckdifferenz als auch über eine Temperatur gesteuert wird, wird der Aufbau des Ventils darüber hinaus verkompliziert.

Der Erfindung liegt die Aufgabe zugrunde, den Aufbau der Ventilanordnung einfach zu gestalten.

Diese Aufgabe wird bei einer Ventilanordnung der eingangs genannten Art dadurch gelöst, daß der Stößel so kurz ist, daß er im Ruhezustand des beweglichen Elements des sekundärseitigen Ventils einen Abstand zum Ventilelement im geöffneten Zustand des primärseitigen Ventils aufweist.

Das sekundärseitige Ventil weist dabei eine einstellbare Ruheöffnung auf. Die Ruheöffnung ergibt sich im Ruhezustand oder der Neutralstellung des sekundärseitigen Ventils. Die Ruheöffnung ist im Grunde eine Drosselöffnung zwischen dem Ventilsitz und dem Ventil-element des sekundärseitigen Ventils. Wenn diese Drosselöffnung einstellbar ist, dann kann man die Komponenten des sekundärseitigen Ventils mit einer größeren Toleranz oder einer geringeren Genauigkeit fertigen. Erst dann, wenn die Komponenten zum sekundärseitigen Ventil zusammengesetzt sind, wird durch einen Einstellvorgang die letztendlich gültige Größe der Ruheöffnung eingestellt. Mit der Einstellung der Ruheöffnung läßt sich Einfluß nehmen auf das Ansprechverhalten des sekundärseitigen Ventils und damit auch auf das Ansprechverhalten des primärseitigen Ventils, das durch das sekundärseitige Ventil gesteuert wird. Letztendlich ergibt sich also durch die Einstellbarkeit der Ruheöffnung eine Einstellbarkeit der Verstärkung zwischen dem sekundärseitigen Ventil und dem primärseitigen Ventil.

Solange sich also das sekundärseitige Ventil im Ruhezustand befindet, ist das primärseitige Ventil unabhängig vom sekundärseitigen Ventil betreibbar. Das primärseitige Ventil kann also dann, wenn keine Entnahme von Brauchwasser auf der Sekundärseite vorliegt, anhand von anderen Kriterien gesteuert werden. Dies vereinfacht zunächst einmal den Regelkreis, den man für die Steuerung des primärseitigen Ventils verwendet. Darüber hinaus können die die Ventilanordnung bildenden Elemente mit einer etwas geringeren Genauigkeit gefertigt werden, weil man zwischen dem Stößel und dem Ventilelement des primärseitigen Ventils einen Abstand hat, bei dem es auf die Einhaltung einer genauen Größe nicht in dem Maß ankommt, wie es beim aneinander Anliegen der einzelnen Elemente erforderlich wäre.

Vorzugsweise weist das Ventilelement des primärseitigen Ventils einen temperaturgesteuerten Antrieb auf. Der temperaturgesteuerte Antrieb wirkt also nicht durch das sekundärseitige Ventil auf das primärseitige Ventil, sondern direkt auf das primärseitige Ventil. Zusammen mit dem Abstand zwischen dem Stößel des sekundärseitigen Ventils hat diese Ausgestaltung die Wirkung, daß man dann, wenn auf der Sekundärseite kein Brauchwasser entnommen wird, das primärseitige Ventil ausschließlich als temperaturgesteuertes Ventil betreiben kann. Man kann beispielsweise das primärseitige Ventil in Abhängigkeit von der Temperatur am Brauchwasserausgang der Sekundärseite steuern. Damit ist es möglich, diese Temperatur immer auf einem vorbestimmten Wert zu halten, so daß der Wärmetauscher nicht erst "warmlaufen" muß. Ein Benutzer, der auf der Sekundärseite Brauchwasser zapft, bekommt praktisch unmittelbar Wasser mit der gewünschten Temperatur. Erst dann, wenn aufgrund der Brauchwasserentnahme auf der Sekundärseite eine Druckdifferenz über das sekundärseitige Ventil auftritt und das sekundärseitige Ventil öffnet, kommt der Stößel zur Anlage an das Ventilelement des primärseitigen Ventils. In diesem Fall wird das primärseitige Ventil und damit die Wärmezufuhr zur Primärseite des Wärmetauschers sowohl von der Temperatur auf der Sekundärseite als auch von dem Durchfluß auf der Sekundärseite gesteuert.

Bevorzugterweise kommen der Stößel und das Ventilelement des primärseitigen Ventils über eine Berührungsfläche miteinander in Kontakt, die senkrecht zur Bewegungsrichtung des Stößels angeordnet ist. Eine derartige Fläche läßt kleinere seitliche Verschiebungen zwischen dem Ventilelement und dem Stößel ohne weiteres zu. Man muß also bei der Montage der Ventilanordnung nicht mehr darauf achten, daß die Bewegungsachsen des Stößels und des Ventilelements exakt übereinstimmen. Ein kleinerer seitlicher Versatz ist durchaus zulässig.

Vorzugsweise weist das Ventilelement einen zum Stößel hin weisenden Vorsprung auf, an dem der Stößel zur Anlage kommt. Das Ventilelement des primärseitigen Ventils ist üblicherweise aus einem elastomeren Werkstoff gebildet. Wenn man nun einen Vorsprung vorsieht, an dem der Stößel zur Anlage kommt, dann kann man diesen Vorsprung aus einem stabileren Werkstoff bilden, beispielsweise aus einem Metall. Eine besonders einfache Ausgestaltung ergibt sich dann, wenn der Vorsprung gebildet ist durch einen Fortsatz der Spindel, an der das Ventilelement befestigt ist und die sich durch das Ventilelement erstreckt. Auch dann, wenn der Stößel auf die Seite des Ventilelements wirkt, die am Ventilsitz des primärseitigen Ventils anliegt oder jedenfalls damit zusammenwirkt, wird der Verschleiß der Ventilanordnung klein gehalten.

Bevorzugterweise ist das sekundärseitige Ventil an einem Ende eines Gehäuses angeordnet. Dies hat den Vorteil, daß man am Ende des Gehäuses mit relativ geringem Aufwand auf das sekundärseitige Ventil zugreifen und damit die Ruheöffnung einstellen kann. Man muß nicht durch weitere Bestandteile der Ventilanordnung hindurchgreifen oder die Ventilanordnung zerlegen, um das sekundärseitige Ventil einstellen zu können. Vorzugsweise weist das sekundärseitige Ventil einen an einer Membran angeordneten Ventilsitz und ein stationäres Ventilelement auf, dessen Position relativ zu einer Ruhestellung der Membran einstellbar ist. Die Ruhestellung der Membran definiert also die Ruheöffnung. Das Ventilelement läßt sich im Gehäuse leichter verstellen als ein Ventilsitz.

Vorzugsweise ist das Ventilelement als Konus ausgebildet. Damit ergibt sich ein Öffnungsverhalten des sekundärseitigen Ventils, bei dem der Öffnungsquerschnitt überproportional zur Öffnungsbewegung der Membran ansteigt. Dies ist eine einfache Maßnahme, um die Schwingungsneigung des Ventils herabzusetzen.

Vorzugsweise ist das Ventilelement in das Gehäuse eingeschraubt. Mit dem Einschrauben erreicht man nicht nur eine Befestigung des Ventilelements im Gehäuse, sondern auf einfache Weise auch die Einstellbarkeit der Drosselöffnung zwischen Membran und Ventilelement. Wenn man das Ventilelement weiter in das Gehäuse hineinschraubt, ergibt sich ein kleinerer Drosselspalt und auch eine kleinere Ruheöffnung. Wenn man das Ventilelement in die entgegengesetzte Richtung schraubt, wird der Drosselspalt entsprechend vergrößert. Zusätzlich kann natürlich eine Möglichkeit vorgesehen sein, um das Ventil-element gegenüber dem Gehäuse abzudichten oder außerhalb des Ventilelements einen Dichtdeckel am Gehäuse anzubringen.

Vorzugsweise ist das primärseitige Ventil in einem ersten Gehäuseteil und das sekundärseitige Ventil in einem zweiten Gehäuseteil angeordnet und die beiden Gehäuseteile sind durch ein drittes Gehäuseteil miteinander verbunden, das eine Betätigungseinrichtung aufnimmt, mit der das primärseitige Ventil durch das sekundärseitige Ventil betätigbar ist. Dies erleichtert die Fertigung der Ventilanordnung weiter, Die Ventil-anordnung ist im Grunde aus drei Modulen zusammengesetzt, wobei jedes Modul für sich hergestellt und voreingestellt werden kann. Jedes Ventilmodul kann dabei so ausgestaltet sein, daß sämtliche Elemente von einer oder von zwei Seiten aus zugänglich sind, so daß jedes Gehäuseteil eine relativ einfache Form haben kann. Erst durch das Zusammenfügen der drei Gehäuseteile werden die drei Ventilmodule zusammengefügt. Dieses Zusammenbauen kann in einem relativ späten Stadium der Herstellung erfolgen.

Hierbei ist bevorzugt, daß das erste Gehäuseteil einen primärseitigen ersten Anschluß, das zweite Gehäuseteil einen sekundärseitigen zweiten Anschluß und das dritte Gehäuseteil einen primärseitigen zweiten Anschluß und einen sekundärseitigen ersten Anschluß aufweist. Man nutzt also das dritte Gehäuseteil auch dazu, den Wärmetauscher an die Ventilanordnung anzuschließen. Dies vereinfacht den Aufbau.

Vorzugsweise erstreckt sich die sekundärseitige Membran bis in einen Berührungsbereich zwischen dem zweiten Gehäuseteil und dem dritten Gehäuseteil. Dies hat zwei Vorteile. Zum einen wird die Membran durch das Zusammenwirken zwischen dem zweiten Gehäuseteil und dem dritten Gehäuseteil in einer definierten Position festgehalten. Zum anderen kann die Membran, die aus einem elastomeren Material gebildet ist, verwendet werden, um das zweite Gehäuseteil und das dritte Gehäuseteil gegeneinander abzudichten. Man muß also keine zusätzlichen Maßnahmen treffen, um die Ventilanordnung in diesem Bereich flüssigkeitsdicht zu gestalten.

Vorzugsweise ist das bewegliche Element als Ventilsitz ausgebildet, wobei die Membran eine mit dem Ventilsitz in Verbindung stehende Öffnung aufweist, durch die Brauchwasser hindurchfließen kann. Dies ist eine Maßnahme, um die Ventilanordnung kompakt zu halten. Die Membran wird durchströmt, so daß man keine Maßnahmen treffen muß, um einen Fluß von Brauchwasser außen um die Membran herum zu erlauben. Vorzugsweise ist dem primärseitigen Ventil ein druckgesteuertes Ventil vorgeschaltet, das eine Membrane aufweist, die sich bis in einen Berührungsbereich zwischen dem ersten Gehäuseteil und dem dritten Gehäuseteil erstreckt. Hier gilt im Grunde das Gleiche. Auch die Membran des druckgesteuerten Ventils kann verwendet werden, um das erste Gehäuseteil und das dritte Gehäuseteil gegeneinander abzudichten.

Vorzugsweise ist der Stößel in einem Mittelabschnitt des dritten Gehäuseteils gelagert. Man entlastet also sowohl das primärseitige Ventil als auch das sekundärseitige Ventil und ihre jeweiligen Gehäuseteile von der Tragefunktion für den Stößel. Dieser wird unabhängig vom ersten Gehäuseteil und vom zweiten Gehäuseteil im dritten Gehäuseteil gehalten, so daß man das dritte Gehäuseteil auch auf diese Funktion hin auslegen kann.

Die Erfindung wird im folgenden anhand eines bevorzugten Ausführungsbeispiels in Verbindung mit der Zeichnung beschrieben. Hierin zeigen:
- Fig. 1: eine Prinzipdarstellung zur Erläuterung des Aufbaus der Ventilanordnung und
- Fig. 2: die Ventilanordnung in einem Längsschnitt.

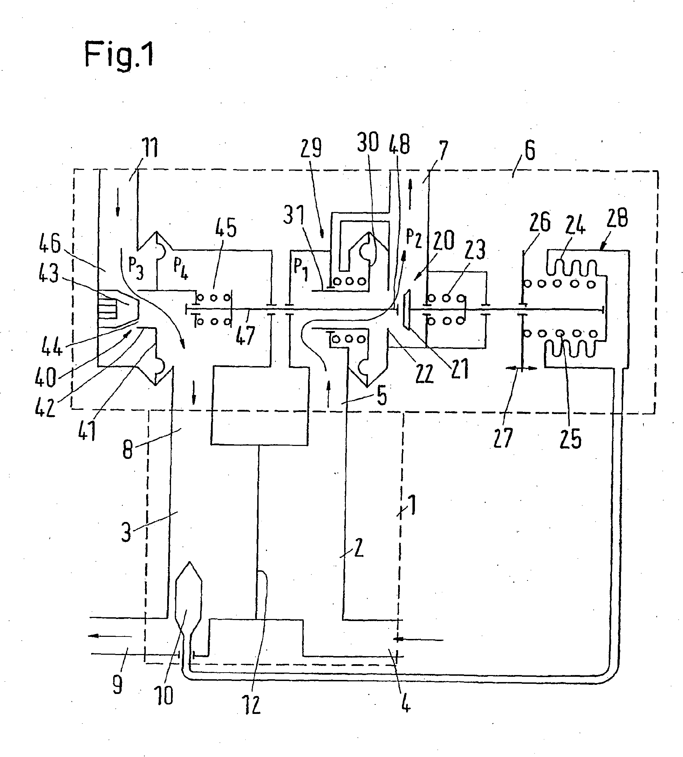

Fig. 1 zeigt einen schematisch dargestellten Wärmetauscher 1 mit einer Primärseite 2 und einer Sekundärseite 3. Die Primärseite 2 weist einen Einlaß 4 auf, der mit einem nicht näher dargestellten Fernwärmeleitungssystem verbunden ist. Die Primärseite 2 weist auch einen Auslaß 5 auf, der über eine Ventilanordnung 6 mit einem Rücklaufanschluß 7 des Fernwärmeleitungsnetzes verbunden ist.

Die Sekundärseite 3 weist einen Eingang 8 auf, durch den Brauchwasser zufließt, und einen Ausgang 9, an dem erwärmtes Brauchwasser entnommen werden kann. Im Bereich des Ausgangs 9 ist ein Temperaturfühler 10 angeordnet, dessen Funktion weiter unten erläutert wird. Der Eingang 8 der Sekundärseite 3 ist über die Ventil-anordnung 6 mit einem Brauchwasseranschluß 11 verbunden, durch den kaltes Brauchwasser zugeführt wird.

In an sich bekannter Weise ist zwischen der Primärseite 2 und der Sekundärseite 3 eine Wärmetauscherfläche 12 angeordnet, die hier nur im Prinzip dargestellt ist. Tatsächlich hat die Wärmetauscherfläche 12 eine wesentlich größere Erstreckung.

Die Ventilanordnung 6 weist ein primärseitiges Ventil 20 mit einem Ventilelement 21 und einem Ventilsitz 22 auf. Das Ventilelement 21 wird durch den Ventilsitz 22 hindurch angeströmt. Das Ventilelement 21 ist durch eine Feder 23 in Öffnungsrichtung vorgespannt. Ein Balgenelement 24, das mit dem Temperaturfühler 10 verbunden ist, wirkt auf das Ventilelement 21 in Schließrichtung. Das Balgenelement 24 arbeitet gegen die Kraft einer Feder 25, die sich an einem verlagerbaren Anschlag 26 abstützt. Durch Verstellen des Anschlags 26 in Richtung eines Doppelpfeiles 27 läßt sich ein Sollwert für die am Ausgang 9 der Sekundärseite 3 herrschende Temperatur des Brauchwassers einstellen.

Wenn die Temperatur am Ausgang 9 der Sekundärseite 3 ansteigt, dann bewegt das Balgenelement 24 das Ventil-element 21 in Richtung auf den Ventilsitz 22 und drosselt damit den Strom von Wärmeträgerfluid durch die Primärseite. Wenn die Temperatur am Ausgang 9 der Sekundärseite 3. absinkt, dann läßt der Druck des Balgen-elements 24 nach, so daß das Ventilelement 21 durch die Kraft der Federn 23, 25 vom Ventilsitz 22 entfernt wird, um einen größeren Durchfluß von Wärmeträgerfluid durch die Primärseite 2 zu ermöglichen. Auf diese Weise ist das primärseitige Ventil 20 ein temperaturgesteuertes Ventil, das durch den temperaturgesteuerten Antrieb 28 gesteuert wird.

Dem primärseitigen Ventil 20 ist noch ein druckgesteuertes Ventil 29 vorgeschaltet. Das druckgesteuerte Ventil 29 weist eine Membrane 30 auf, die von einem Druck P1 vor dem Ventilsitz 22 einerseits und von einem Druck P2 hinter dem Ventilsitz 22 andererseits beaufschlagt wird. Die Membrane 30 verlagert ein Drosselelement 31. Die Funktion des druckgesteuerten Ventils 29 ist an sich bekannt und wird daher nicht weiter erläutert.

Der Strom von Brauchwasser durch die Sekundärseite 3 des Wärmetauschers 1 wird durch ein sekundärseitiges Ventil 40 gesteuert. Das sekundärseitige Ventil 40 weist eine Membran 41 auf, an der ein Ventilsitz 42 befestigt ist. Der Ventilsitz 42 wird bei einer Bewegung der Membran 41 verlagert. Der Ventilsitz 42 bildet mit einem Ventilelement 43 einen Drosselspalt 44, dessen Größe sich in Abhängigkeit von der Stellung der Membran 41 ändert.

Die Stellung der Membran wird bestimmt durch eine Druckdifferenz zwischen einem Druck P3 vor dem Drosselspalt 44 und einem Druck P4 hinter dem Drosselspalt 44. Entgegen dieser Druckdifferenz wirkt die Kraft einer Kompensationsfeder 45, die allerdings erst nach einer gewissen Auslenkung der Membran 41 zu wirken beginnt. Im übrigen wirkt natürlich eine gewisse Eigenspannung der Membran 41 gegen die Druckdifferenz P3-P4.

Wenn auf beiden Seiten der Membran 41 die gleichen Kräfte herrschen, dann bildet der Drosselspalt 44 eine Ruheöffnung. Die Größe dieser Ruheöffnung ist nun dadurch einstellbar, daß das Ventilelement 43, das hier als Konus ausgebildet ist, in einem Gehäuse 46 verstellt werden kann. Das Ventilelement 43 ist in das Gehäuse 46 eingeschraubt, so daß man durch Drehen des Ventilelements 43 seine Lage relativ zur Membran 41 im drucklosen Zustand verändern kann. Gewünscht ist eine möglichst kleine Ruheöffnung, so daß das sekundärseitige Ventil 40 zwar auch dann nicht geschlossen wird, wenn kein Brauchwasser entnommen wird und der Druck P3 vor dem Drosselspalt 44 gleich dem Druck P4 hinter dem Drosselspalt 44 ist. Gleichwohl soll die Ruheöffnung möglichst klein gehalten werden.

Mit der Membran 41 ist über die Kompensationsfeder 45 ein Stößel 47 verbunden, der dementsprechend mit bewegt wird, wenn sich die Membran 41 bewegt. Dieser Stößel 47 wirkt mit seinem anderen Ende 48 auf das Ventilelement 21 des primärseitigen Ventils 20, wenn die Membran 41 weit genug ausgelenkt worden ist.

Der Stößel 47 ist aber so kurz, daß dann, wenn sich die Membran 41 in ihrer Ruhestellung befindet, also keine Druckdifferenz über die Membran 41 herrscht, der Stößel 47 das Ventilelement 21 nicht berührt, solange dies geöffnet ist.

Dies hat nun folgende Auswirkung: Solange kein Brauchwasser entnommen ist, hat der Drosselspalt 44 seine kleinste Größe und die Membran 41 ist nicht ausgelenkt. In dieser Situation berührt das Ende 48 des Stößels 47 das Ventilelement 21 des primärseitigen Ventils nicht. Das primärseitige Ventil 20 arbeitet also ausschließlich als temperaturgesteuertes Ventil unter der Wirkung des temperaturgesteuerten Antriebs 28. Man kann so auf einfache Weise, d.h. mit einfachem mechanischen Aufwand und auch mit einem relativ einfachen Regelkreis, dafür sorgen, daß die Temperatur am Ausgang 9 der Sekundärseite 3 immer auf einem gewünschten Wert gehalten wird.

Wird nun auf der Sekundärseite 3 Wasser entnommen, dann sinkt der Druck P4 ab und die Membran 41 wird über die Druckdifferenz P3 - P4 ausgelenkt. Dabei kommt der Stößel 47 in Kontakt mit dem Ventilelement 21 und beaufschlagt dieses in Öffnungsrichtung, so daß zusätzlich zu der Temperatursteuerung auch eine Beeinflussung des primärseitigen Ventils 20 durch die auf der Sekundärseite durchströmende Menge an Brauchwasser gegeben ist.

Sobald die Wasserentnahme an der Sekundärseite 3 beendet wird, kehrt die Membran 41 in ihren Ruhezustand zurück und die Steuerung des primärseitigen Ventils 20 kann sehr schnell wieder auf eine reine Temperatursteuerung umschalten.

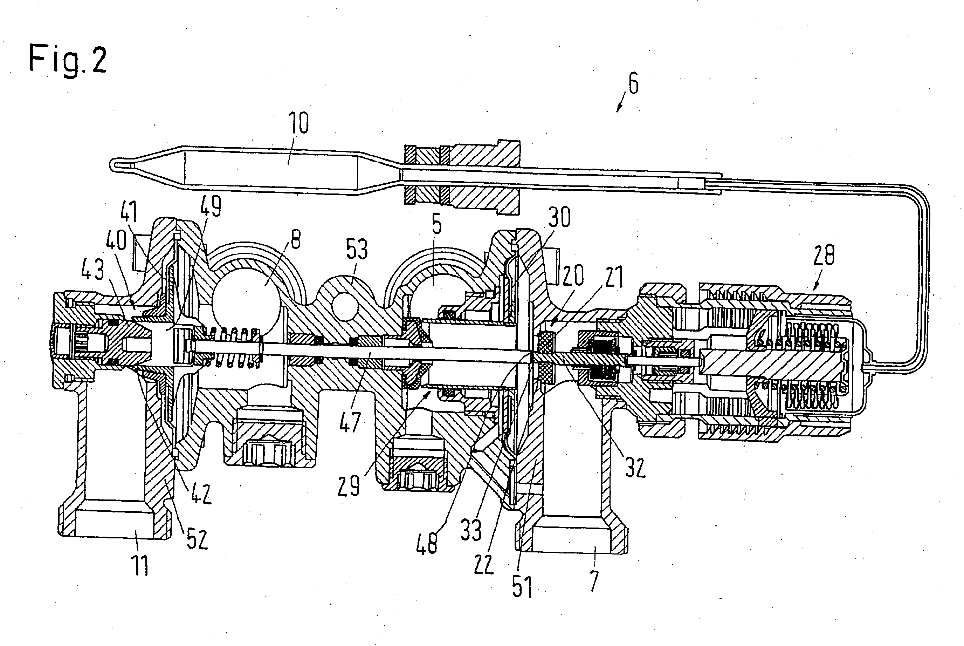

Aus Fig. 2 ergibt sich nun der mechanische Aufbau der Ventilanordnung 6. Gleiche Teile sind mit den gleichen Bezugszeichen wie in Fig. 1 bezeichnet.

Die Ventilanordnung weist ein erstes Gehäuseteil 51 auf, das das primärseitige Ventil 20 aufnimmt, ein zweites Gehäuseteil 52, das das sekundärseitige Ventil 40 aufnimmt, und ein drittes Gehäuseteil 53, das das erste Gehäuseteil 51 mit dem zweiten Gehäuseteil 52 verbindet und im übrigen den Stößel 47 lagert. Im ersten Gehäuseteil 51 ist der Rücklaufanschluß 7 angeordnet. Dieser bildet einen ersten Anschluß der Primärseite. Im zweiten Gehäuseteil 52 ist der Brauchwasseranschluß 11 angeordnet. Dieser bildet einen zweiten Anschluß der Sekundärseite. Im dritten Gehäuseteil ist der Auslaß 5 und der Eingang 8 angeordnet. Diese beiden Anschlüsse bilden also den zweiten Anschluß der Primärseite und einen ersten Anschluß der Sekundärseite.

Die beiden Membranen 30, 41 erstrecken sich bis in einen Berührungsbereich zwischen dem ersten Gehäuseteil 51 und dem dritten Gehäuseteil 53 bzw. dem zweiten Gehäuseteil 52 und dem dritten Gehäuseteil 53. Dies hat den Vorteil, daß die beiden Membranen 30, 41 durch das Zusammensetzen der drei Gehäuseteile einerseits fixiert werden, andererseits aber auch als Dichtungen zwischen den Gehäuseteilen 51-53 verwendet werden können.

Das erste Gehäuseteil 51 mit dem primärseitigen Ventil 20, das zweite Gehäuseteil 52 mit dem sekundärseitigen Ventil 40 und das dritte Gehäuseteil 53 mit dem Stößel 47 können jeweils für sich vormontiert werden. Dabei ist eine Ausrichtung der einzelnen Elemente quer zu ihrer Bewegungsrichtung nur in einem relativ groben Maß erforderlich, weil beispielsweise der Stößel 47 und das Ventilelement 21 über eine Berührungsfläche am Ende 48 aneinander anliegen, die quer zur Längserstreckung des Stößels 47 angeordnet ist. Das Ventilelement 21 muß also nicht genau mittig getroffen werden.

Das Ventilelement 21 weist eine Spindel 32 auf, die das Ventilelement 21 durchragt und auf der anderen Seite einen Vorsprung 33 bildet, an dem der Stößel 47 anliegt. Dieser Vorsprung 33 kann dementsprechend aus einem Metall gebildet sein, das mit dem Metall des Stößels 47 verschleißarm zusammenwirkt. Der Vorsprung 33 ist wesentlich widerstandsfähiger gegen eine Beaufschlagung durch den Stößel 47 als das Ventilelement 21 selbst, das in der Regel aus einem elastomeren Material gebildet ist.

Die Membran 41 weist eine Öffnung 49 auf, durch die Brauchwasser strömt, das durch den Ventilsitz 42 getreten ist. Um dieses Brauchwasser auch zum Eingang 8 des Wärmetauschers gelangen zu lassen, ist der Stößel 47 zweckmäßigerweise über einen käfigartigen Verbinder mit der Membran 41 verbunden, der nicht näher dargestellt ist und beispielsweise drei sternförmig angeordnete Beine aufweist.

In Fig. 2 sind das primärseitige Ventil 20 und das sekundärseitige Ventil 40 in vollkommen geschlossenem Zustand dargestellt. In diesem Zustand kann der Stößel 47 am Ventilelement 21, genauer gesagt dessen Vorsprung 33, anliegen. Im Betrieb wird aber das Ventilelement 21 weiter vom Ventilsitz 22 abheben als der Ventilsitz 42 vom Ventilelement 43, so daß ohne Brauchwasserentnahme ein wirksamer Abstand zwischen dem Stößel 47 und dem Ventilelement 21 besteht.

## Patentansprüche

1. Ventilanordnung (6) zum Anschließen eines Wärmetauschers (1) einer Warmwasserentnahmevorrichtung an ein Fernwärmenetz mit einem primärseitigen Ventil (20), das einen Durchfluß von Wärmeträgerfluid durch eine Primärseite (2) des Wärmetauschers steuert, und einem druckgesteuerten sekundärseitigen Ventil (40), das auf einen Durchfluß von Brauchwasser durch eine Sekundärseite (3) des Wärmetauschers einwirkt, wobei das primärseitige Ventil (20) durch das sekundärseitige Ventil (40) über einen Stößel (47) betätigbar ist, und der Stößel (47) so kurz ist, daß er im Ruhezustand des beweglichen Elements (42) des sekundärseitigen Ventils (40) einen Abstand zum Ventilelement (21) im geöffneten Zustand des primärseitigen Ventils (20) aufweist, **dadurch gekennzeichnet, daß** das sekundärseitige Ventil (40) eine einstellbare Ruheöffnung (44) aufweist.

2. Ventilanordnung nach Anspruch 1, **dadurch gekennzeichnet, daß** das Ventilelement (21) des primärseitigen Ventils (20) einen temperaturgesteuerten Antrieb (28) aufweist.

3. Ventilanordnung nach Anspruch 1 oder 2, **dadurch gekennzeichnet, daß** der Stößel (47) und das Ventilelement (21) des primärseitigen Ventils (20) über eine Berührungsfläche (48) miteinander in Kontakt kommen, die senkrecht zur Bewegungsrichtung des Stößels (47) angeordnet ist.

4. Ventilanordnung nach Anspruch 3, **dadurch gekennzeichnet, daß** das Ventilelement (21) einen zum Stößel (47) hin weisenden Vorsprung (33) aufweist, an dem der Stößel (47) zur Anlage kommt.

5. Ventilanordnung nach einem der Ansprüche 1 bis 4, **dadurch gekennzeichnet, daß** das sekundärseitige Ventil (40) an einem Ende eines Gehäuses (46) angeordnet ist.

6. Ventilanordnung nach einem der Ansprüche 1 bis 5, **dadurch gekennzeichnet, daß** das sekundärseitige Ventil (40) einen an einer Membran (41) angeordneten Ventilsitz (42) und ein stationäres Ventilelement (43) aufweist, dessen Position relativ zu einer Ruhestellung der Membran (42) einstellbar ist.

7. Ventilanordnung nach Anspruch 6, **dadurch gekennzeichnet, daß** das Ventilelement (43) als Konus ausgebildet ist.

8. Ventilanordnung nach Anspruch 6 oder 7, **dadurch gekennzeichnet, daß** das Ventilelement (43) in das Gehäuse (46) eingeschraubt ist.

9. Ventilanordnung nach einem der Ansprüche 1 bis 8, **dadurch gekennzeichnet, daß** das primärseitige Ventil (20) in einem ersten Gehäuseteil (51) und das sekundärseitige Ventil (40) in einem zweiten Gehäuseteil (52) angeordnet ist und die beiden Gehäuseteile (51, 52) durch ein drittes Gehäuseteil (53) miteinander verbunden sind, das eine Betätigungseinrichtung aufnimmt, mit der das primärseitige Ventil (20) durch das sekundärseitige Ventil (40) betätigbar ist.

10. Ventilanordnung nach Anspruch 10, **dadurch gekennzeichnet, daß** das erste Gehäuseteil (51) einen primärseitigen ersten Anschluß (7), das zweite Gehäuseteil (52) einen sekundärseitigen zweiten Anschluß (11) und das dritte Gehäuseteil (53) einen primärseitigen zweiten Anschluß (5) und einen sekundärseitigen ersten Anschluß (8) aufweist.

11. Ventilanordnung nach Anspruch 10 oder 11, **dadurch gekennzeichnet, daß** sich die sekundärseitige Membran (41) bis in einen Berührungsbereich zwischen dem zweiten Gehäuseteil (52) und dem dritten Gehäuseteil (53) erstreckt.

12. Ventilanordnung nach Anspruch 12, **dadurch gekennzeichnet, daß** das bewegliche Element (42) als Ventilsitz ausgebildet ist, wobei die Membran (41) eine mit dem Ventilsitz (42) in Verbindung stehende Öffnung (49) aufweist, durch die Brauchwasser hindurchfließen kann.

13. Ventilanordnung nach einem der Ansprüche 10 bis 13, **dadurch gekennzeichnet, daß** dem primärseitigen Ventil (20) ein druckgesteuertes Ventil (29) vorgeschaltet ist, das eine Membrane (30) aufweist, die sich bis in einen Berührungsbereich zwischen dem ersten Gehäuseteil (51) und dem dritten Gehäuseteil (53) erstreckt.

14. Ventilanordnung nach einem der Ansprüche 10 bis 14, **dadurch gekennzeichnet, daß** der Stößel (47) in einem Mittelabschnitt des dritten Gehäuseteils (53) gelagert ist.

## Claims

1. Valve arrangement (6) for connecting a heat exchanger (1) of a hot water consumption device to a district heating system, the valve arrangement comprising a primary side valve (20) that controls a flow of heat carrying fluid through a primary side (2) of the heat exchanger, and a pressure controlled secondary side valve (40) that acts upon a flow of utility water through a secondary side (3) of the heat exchanger, the primary side valve (20) being activatable by the secondary side valve (40) via a tappet (47), the tappet (47) being so short that in the neutral state of the movable element (42) of the secondary side valve (40) it has a distance to the valve element (21) in the open state of the primary side valve (20, **characterised in that** the secondary side valve (40) has an adjustable neutral opening (44).

2. Valve arrangement according to claim 1, **characterised in that** the valve element (21) of the primary side valve (20) comprises a temperature controlled drive (28).

3. Valve arrangement according to claim 1 or 2, **characterised in that** the tappet (47) and the valve element (21) of the primary side valve (20) get in contact with each other via a contact face (48) that is arranged laterally to the movement direction of the tappet (47).

4. Valve arrangement according to claim 3, **characterised in that** the valve element (21) has a projection (33) in the direction of the tappet (47), on which the tappet (47) comes to rest.

5. Valve arrangement according to one of the claims 1 to 4, **characterised in that** the secondary side valve (40) is arranged at an end of a housing (46).

6. Valve arrangement according to one of the claims 1 to 5, **characterised in that** the secondary side valve (40) comprises a valve seat (42) arranged on a membrane (41) and a stationary valve element (43), whose position is adjustable in relation to a neutral position of the membrane (41).

7. Valve arrangement according to claim 6, **characterised in that** the valve element (43) is made as a cone.

8. Valve arrangement according to claim 6 or 7, **characterised in that** the valve element (43) is screwed into the housing (46).

9. Valve arrangement according to one of the claims 1 to 8, **characterised in that** the primary side valve (20) is arranged in a first housing part (51) and the secondary side valve (40) is arranged in a second housing part (52), and that the two housing parts (51, 51) are joined by means of a third housing part (53) that accommodates an actuating device, by means of which the primary side (20) is activatable by the secondary side valve (40).

10. Valve arrangement according to claim 9, **characterised in that** the first housing part (51) comprises a primary side first connection (7), the second housing part (52) comprises a secondary side second connection (11) and the third housing part (53) comprises a primary side second connection (5) and a secondary side first connection (8).

11. Valve arrangement according to claim 9 or 10, **characterised in that** the secondary side membrane (41) extends into a contact area between the second housing part (52) and the third housing part (53).

12. Valve arrangement according to claim 11, **characterised in that** the movable element (42) is made as a valve seat, the membrane (41) having an opening (49), which is in connection with the valve seat (42) and through which the utility water can flow.

13. Valve arrangement according to one of the claims 10 to 12, **characterised in that** a pressure controlled valve (29) is connected in series before the primary side valve (20), said valve (29) comprising a membrane (30) that extends into a contact area between the first housing part (51) and the third housing part (53).

14. Valve arrangement according to one of the claims 10 to 13, **characterised in that** the tappet (47) is supported in a central section of the third housing part (53).

## Revendications

1. Système de soupapes (6) pour raccorder un échangeur de chaleur (1) d'un dispositif de prélèvement d'eau chaude à un réseau de chauffage urbain avec une soupape (20) côté primaire qui commande un débit de fluide caloporteur par un côté primaire (2) de l'échangeur de chaleur, et une soupape (40) côté secondaire commandée par la pression qui agit sur un débit d'eau d'usage par un côté secondaire (3) de l'échangeur de chaleur, dans lequel la soupape (20) côté primaire est actionnable par la soupape (40) côté secondaire par le biais d'un poussoir (47), et le poussoir (47) est si court qu'il présente à l'état de repos de l'élément mobile (42) de la soupape (40) côté secondaire une distance par rapport à l'élément de soupape (21) à l'état ouvert de la soupape côté primaire (20), **caractérisé en ce que** la soupape (40) côté secondaire présente une ouverture de repos réglable (44).

2. Système de soupapes selon la revendication 1, **caractérisé en ce que** l'élément de soupape (21) de la soupape (20) côté primaire présente un entraînement (28) commandé par la température.

3. Système de soupapes selon la revendication 1 ou 2, **caractérisé en ce que** le poussoir (47) et l'élément de soupape (21) de la soupape (20) côté primaire entrent en contact l'un avec l'autre par le biais d'une surface de contact (48) qui est disposée perpendiculairement au sens de déplacement du poussoir (47).

4. Système de soupapes selon la revendication 3, **caractérisé en ce que** l'élément de soupape (21) présente une saillie (33) dirigée vers le poussoir (47), contre laquelle le poussoir (47) vient en appui.

5. Système de soupapes selon l'une quelconque des revendications 1 à 4, **caractérisé en ce que** la soupape (40) côté secondaire est disposée sur une extrémité d'un boîtier (46).

6. Système de soupapes selon l'une quelconque des revendications 1 à 5, **caractérisé en ce que** la soupape côté secondaire (40) présente un siège de soupape (42) disposé sur une membrane (41) et un élément de soupape stationnaire (43), dont la position peut être réglée par rapport à une position de repos de la membrane (42).

7. Système de soupapes selon la revendication 6, **caractérisé en ce que** l'élément de soupape (43) est réalisé comme un cône.

8. Système de soupapes selon la revendication 6 ou 7, **caractérisé en ce que** l'élément de soupape (43) est vissé dans le boîtier (46).

9. Système de soupapes selon l'une quelconque des revendications 1 à 8, **caractérisé en ce que** la soupape (20) côté primaire est disposée dans une première partie de boîtier (51) et la soupape (40) côté secondaire est disposée dans une deuxième partie de boîtier (52) et les deux parties de boîtier (51, 52) sont reliées entre elles par une troisième partie de boîtier (53) qui reçoit un dispositif d'actionnement, avec lequel la soupape côté primaire (20) peut être actionnée par la soupape (40) côté secondaire.

10. Système de soupapes selon la revendication 10, **caractérisé en ce que** la première partie de boîtier (51) présente un premier raccordement (7) côté primaire, la deuxième partie de boîtier (52) un second raccordement (11) côté secondaire et la troisième partie de boîtier (53) un second raccordement (5) côté primaire et un premier raccordement (8) côté secondaire.

11. Système de soupapes selon la revendication 10 ou 11, **caractérisé en ce que** la membrane (41) côté secondaire s'étend jusque dans une zone de contact entre la deuxième partie de boîtier (52) et la troisième partie de boîtier (53).

12. Système de soupapes selon la revendication 12, **caractérisé en ce que** l'élément mobile (42) est réalisé comme un siège de soupape, la membrane (41) présentant une ouverture (49) en liaison avec le siège de soupape (42), par laquelle de l'eau d'usage peut s'écouler.

13. Système de soupapes selon l'une quelconque des revendications 10 à 13, **caractérisé en ce qu'**une soupape (29) commandée par la pression est montée en amont de la soupape (20) côté primaire, laquelle présente une membrane (30) qui s'étend jusque dans une zone de contact entre la première partie de boîtier (51) et la troisième partie de boîtier (53).

14. Système de soupapes selon l'une quelconque des revendications 10 à 14, **caractérisé en ce que** le poussoir (47) est logé dans une section médiane de la troisième partie de boîtier (53).
